# EUROPEAN PATENT SPECIFICATION

(11) **EP 1 847 446 B1**
(45) Date of publication and mention of the grant of the patent: **15.10.2008**
(21) Application number: 07007903.3
(22) Date of filing: 18.04.2007
(51) Int. Cl.: B62D 25/08

(54) **Front vehicle body structure**
Vorderteilkonstruktion einer Fahrzeugkarosserie
Structure de carrosserie frontale d'un véhicule

(30) Priority: 20.04.2006 JP 2006116379
(43) Date of publication of application: 24.10.2007
(73) Proprietor: Honda Motor Co., Ltd., Tokyo 107-8556 (JP)
(72) Inventor: Sato, Yoshihiko c/o Honda R&D Co. Ltd., 351-0193 Saitama (JP); Horiguchi, Satoshi c/o Honda R&D Co. Ltd., 351-0193 Saitama (JP); Mizutani, Yoshimi c/o Forum Engineering Inc., Minato-ku, Tokyo (JP)
(74) Representative: Trossin, Hans-Jürgen

(56) References cited:
- US-A1- 2005 230 162
- US-B1- 6 405 819

## Description

The present invention relates to a front vehicle body structure in which an air intake (duct) extends toward the front of the vehicle body by way of a region under an upper side member of a front bulkhead, an air inlet of the air intake is oriented upwardly, and a bumper-face supporting bracket is provided over the air inlet.

A front vehicle body structure is known from document US-A-2005/230162 which discloses a front structure of a vehicle including a duct having an air inlet portion for introducing air into the duct, a vehicle body member, a bracket provided on the vehicle body member in the vicinity of the air inlet portion, and a fitting member provided on the bracket in the vicinity of the air inlet portion. The bracket and the fitting member introduce air to the air inlet portion through a tortuous flow path.

Furthermore, in the front vehicle body structure known from US-A-2005/230162, a bracket is arranged on the upper frame member of a radiator panel in the vicinity of the air inlet of an air intake duct, and a bumper is arranged on the bracket in the vicinity of the air inlet.

Among the various conventionally-known front vehicle body structures for buses etc. are ones which include an air cleaner provided behind a front road wheel, and an air intake provided to extend from the air cleaner to a front end portion of the vehicle body, by way of a region behind the front road wheel, so as to take in air through an air inlet located in the front end portion (see, for example, Japanese Utility Model Laid-Open Publication No. HEI-5-52254).

In the case of buses, which are large vehicles, it is relatively easy to secure, in their front vehicle body structure, a space to allow the air intake to extend from a region behind a front road wheel to a front end portion of the vehicle body.

In the case of small vehicles, however, it is difficult to secure, in their front vehicle body structure (i.e., engine room), a space for providing the air intake. One conceivable way to secure such a space is to extend the air intake, connected to the air cleaner, to the neighborhood of a bumper face by way of a region beneath an upper side member of a front bulkhead. If the air intake is extended to the neighborhood of the bumper face, however, it is possible that, as the vehicle travels over a puddle, water splashed with the front road wheel may enter the air intake through the air inlet via a front grille. One conceivable approach to prevent the splashed water from entering the air intake is to orient the air inlet to open upwardly.

However, in the case where the air inlet is oriented to open upwardly, rain water or the like may undesirably flow down a headlight and then enter the air inlet from the lower end of the headlight. Therefore, in the case where the air intake is extended to the neighborhood of the bumper face by way of the region under the upper side member of the front bulkhead, it has heretofore been necessary to make arrangements for preventing water of a puddle, rainwater, etc. from entering the air inlet of the air intake.

In view of the foregoing prior art problems, it is the object of the present invention to provide an improved front vehicle body structure which allows an air intake to extend forwardly to the neighborhood of a bumper face by way of a region under an upper side member, and which can prevent water of a puddle, rainwater, etc. from entering the air inlet of the air intake.

In order to accomplish the above-mentioned object, the present invention provides an front vehicle body structure which comprises: an air intake that extends toward a front of a vehicle body by way of a region under an upper side member of a front bulkhead and has an air inlet oriented upwardly; and a bumper-face supporting bracket, provided over the air inlet, for supporting a bumper face. Here, the bumper-face supporting bracket comprises: a horizontal section extending in a width direction of the vehicle body along the upper side member; a slanting section extending obliquely downward from an inner end portion of the horizontal section; a guide wall portion, provided on a region of the horizontal section near the slanting section, for guiding water, having ascended along the slanting section, toward a front and rear of the vehicle body; a front drainage path, provided in a front wall portion of the horizontal section, for directing, to the slanting section, the water having been guided by the guide wall portion toward the front of the vehicle body and water having flown from an upper surface of the horizontal section downward toward the front of the vehicle body; and a rear drainage path, provided in a rear wall portion of the horizontal section, for directing, to the slanting section, the water having been guided by the guide wall portion toward the rear of the vehicle body and water having flown from the upper surface of the horizontal section downward toward the rear of the vehicle body.

In the present invention, the horizontal section of the bumper-face supporting bracket extends along the upper side member and is located over the air inlet (namely, the air inlet of the air intake (duct) is located under the bumper-face supporting bracket). The slanting section extends obliquely downward from the inner end portion of the horizontal section, and the guide wall portion is provided on a region of the horizontal section near the slanting section. Further, the front drainage path is provided in the front wall portion of the horizontal section, while the rear drainage path is provided in the rear wall portion of the horizontal section.

With such arrangements, water of a puddle, having ascended along the slanting section, can be guided, by the guide wall portion, toward the front and rear of the vehicle body. The water, having been guided by the guide wall portion toward the front and rear of the vehicle body, can be directed, via the front and rear drainage paths, to the slanting section. Thus, it is possible to reliably prevent water of a puddle, having ascended along the upper surface of the slanting portion, from entering the air inlet. In addition, rainwater, having dropped onto the upper surface of the horizontal section and flown down toward the front and rear of the vehicle body, can be directed by the front and rear drainage paths to the slanting section. Thus, it is possible to prevent the rainwater from entering the air inlet.

As a result, the present invention can reliably prevent water of a puddle and rainwater from entering the air inlet, although the front vehicle body structure is of the type in which the air intake is extended to the neighborhood of the bumper face by way of a region under the upper side member and the air inlet of the air intake is oriented upwardly.

Certain preferred embodiments of the present invention will be described in detail below, by way of example only, with reference to the accompanying drawings, in which:
Fig. 1 is a perspective view showing a front vehicle body structure of the present invention with a bumper face and headlights removed therefrom;
Fig. 2 is a perspective view showing a left bumper-face supporting bracket in the front vehicle body structure of the present invention;
Fig. 3 is an exploded perspective view showing the front vehicle body structure of the present invention with the left bumper-face supporting bracket removed therefrom;
Fig. 4 is a rear perspective view of the left bumper-face supporting bracket of the front vehicle body structure of the present invention;
Fig. 5 is a plan view of the left bumper-face supporting bracket of the front vehicle body structure of the present invention;
Figs. 6A and 6B are views explanatory of how rainwater having dropped onto the left bumper-face supporting bracket is guided in the front vehicle body structure; and
Figs. 7A and 7B are views explanatory of how water of some puddle, having ascended along a slanting section of the left bumper-face supporting bracket, is guided in the front vehicle body structure.

In the following description, the terms "front", "rear", "left" and "right" are used to refer to directions as viewed from a human operator or driver.

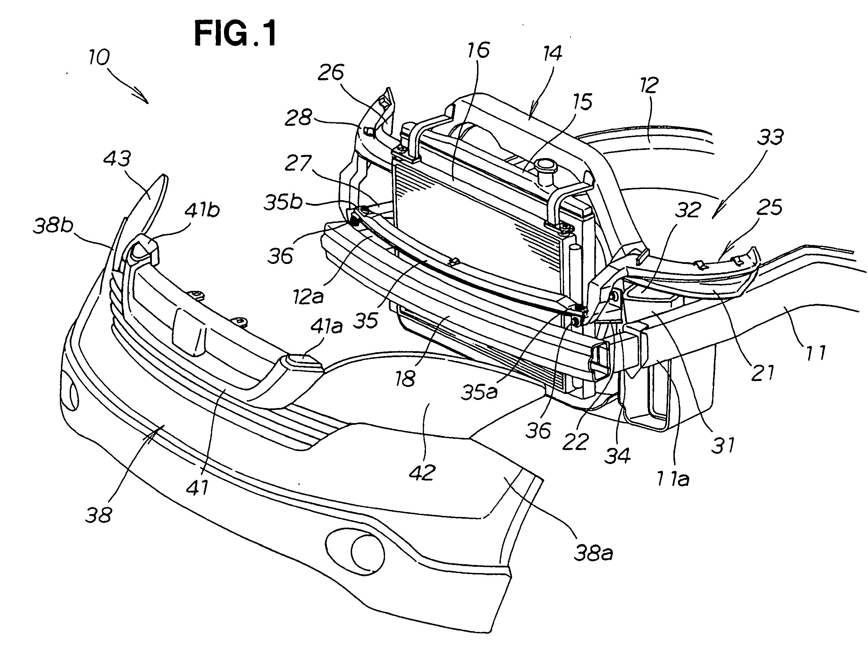

Reference is initially made to Fig. 1 showing in perspective a front vehicle body structure 10 in accordance with an embodiment of the preset invention with a bumper face and headlights removed therefrom. The front vehicle body structure 10 includes left and right front side frames 11 and 12 extending in a front-rear direction or length direction of the vehicle body, and a front bulkhead 14 fixed to respective front end portions 11a and 12a of the left and right front side frames 11 and 12. Radiator 15 and condenser 16 are mounted on the front bulkhead 14, and a front bumper beam 18 is disposed in a width direction of the vehicle body in front of the condenser 16 and fixed to and extending between the respective front end portions 11a and 12a of the front side frames 11 and 12. For example, the condenser 16 functions to cools and liquidizes refrigerant gas for an air-conditioner.

In the front vehicle body structure 10, a left bumper-face supporting bracket 25 is bolted to a left upper side member 21 and left mounting member 22 of the front bulkhead 14, and a right-bumper-face supporting bracket 28 is bolted to a right upper side member 26 and right mounting member 27 of the front bulkhead 14. Further, in the front vehicle body structure 10, an air intake (duct) 31 extends forward from a no-shown air cleaner by way of a region under the left upper side member 21, and an air inlet 32 of the air intake 31 is oriented to open upwardly.

The left bumper-face supporting bracket 25 is disposed over the air inlet 32 of the air intake 31; that is, the air inlet 32 is located under the left bumper-face supporting bracket 25. The air intake 31 is connected to the not-shown air cleaner that is in turn provided in an interior space (i.e., engine room) 33 of the front vehicle body structure 10.

The left mounting member 22 is bolted to a left strut 34 of the front bulkhead 14. Left end portion 35a of an upper beam 35 is fastened, by means of a bolt 36, to the left mounting member 22 together with the left bumper-face supporting bracket 25.

The right mounting member 27 is bolted to a right strut (not shown) of the front bulkhead 14. Right end portion 35b of the upper beam 35 is fastened, by means of a bolt 36, to the right mounting member 27 together with the right bumper-face supporting bracket 28.

The right bumper-face supporting bracket 28 supports not only a right end portion 38b of a bumper face 38 but also a right end portion 41b of a front grille 41. The left bumper-face supporting bracket 25 supports not only a left end portion 38a of the bumper face 38 but also a left end portion 41a of the front grille 41.

Left headlight 42 is provided above the left bumper-face supporting bracket 25. The left bumper-face supporting bracket 25 is disposed over the air inlet 32 of the air intake 31 and constructed to prevent water of a puddle or rainwater from entering the air inlet 32 of the air intake 31, as will be later detailed.

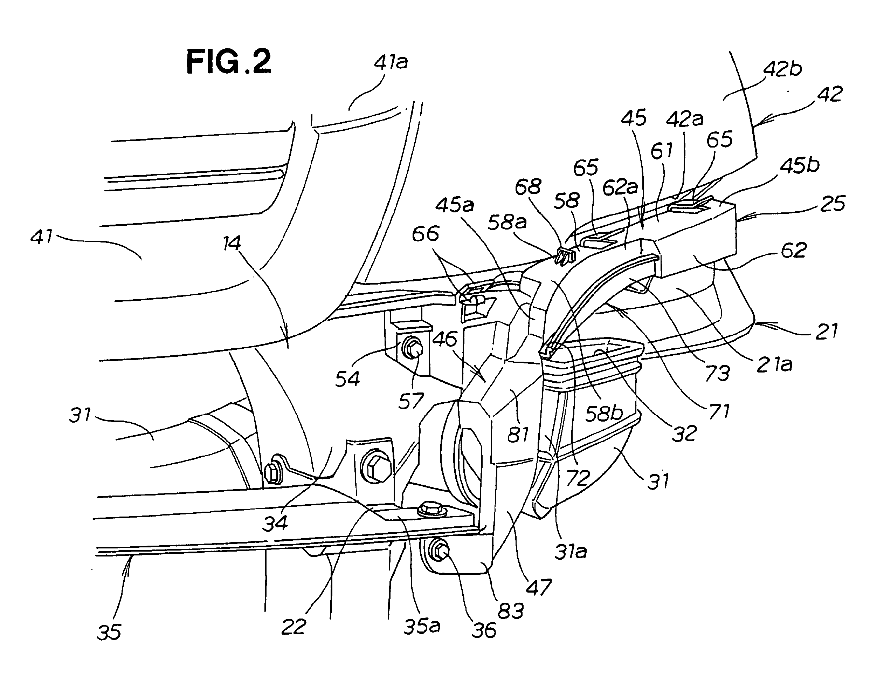

The following paragraphs describe the left bumper-face supporting bracket 25 with reference to Figs. 2 - 5.

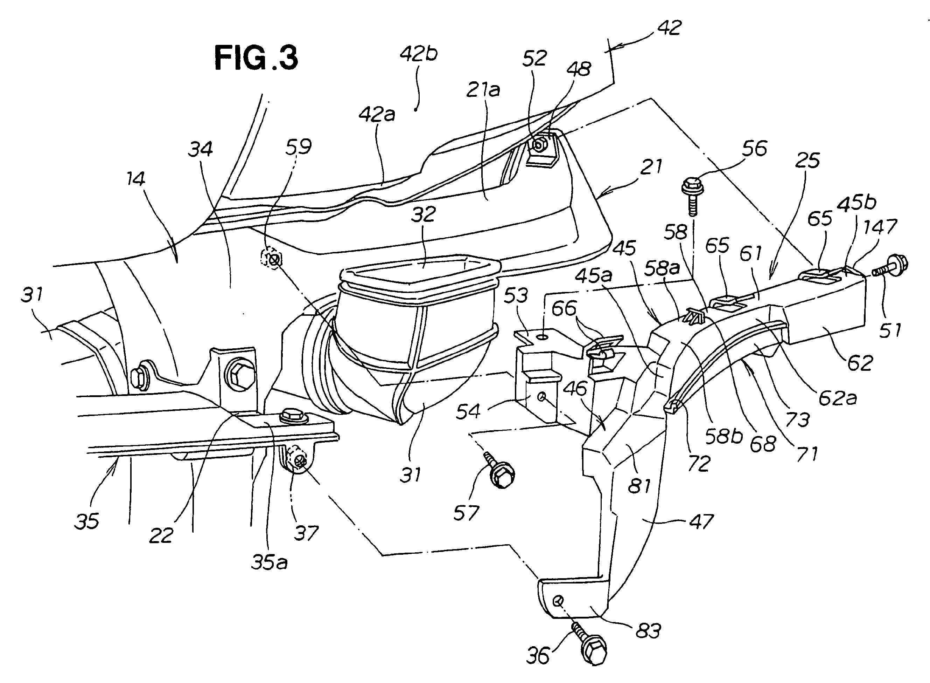

Fig. 2 is a perspective view showing the left bumper-face supporting bracket 25 in the front vehicle body structure, and Fig. 3 is an exploded perspective view showing the front vehicle body structure with the left bumper-face supporting bracket 25 removed therefrom.

The air intake 31 extends from the air cleaner, by way of a region under the left upper side member 21 of the front bulkhead 14, toward the front of the vehicle body, and the air inlet 32 of the air intake 31 opens upwardly. The left bumper-face supporting bracket 25 is disposed over the air inlet 32.

The left bumper-face supporting bracket 25 includes a horizontal section 45 extending in the width direction of the vehicle body along the upper side member 21, a slanting section 46 extending obliquely downward from an inner end portion 45a of the horizontal section 45, and a vertical portion 47 extending downward from the slanting section 46.

The horizontal section 45 has an outer end portion 45b attached to an upper surface 21a of the left upper side member 21, and the inner end portion 45a of the horizontal section 45 projects forwardly of the left upper side member 21. The horizontal section 45 slightly slants downward from the outer end portion 45b to the inner end portion 45a.

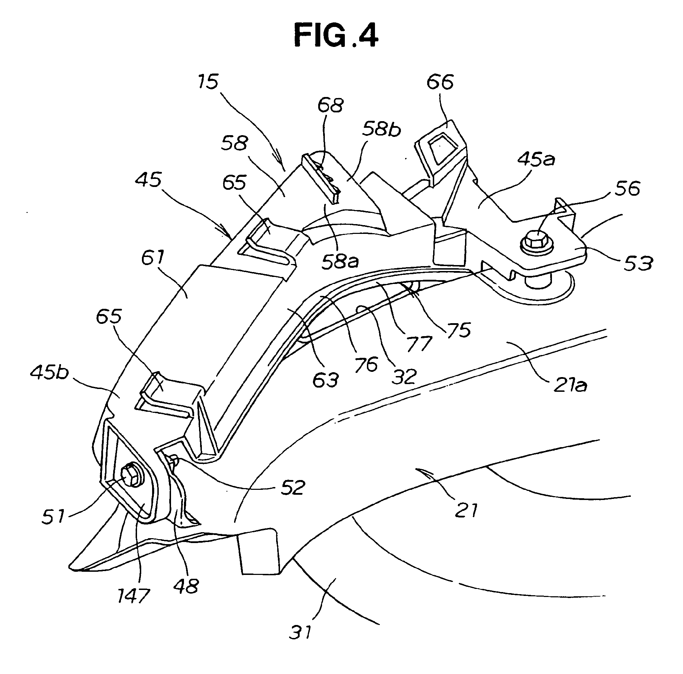

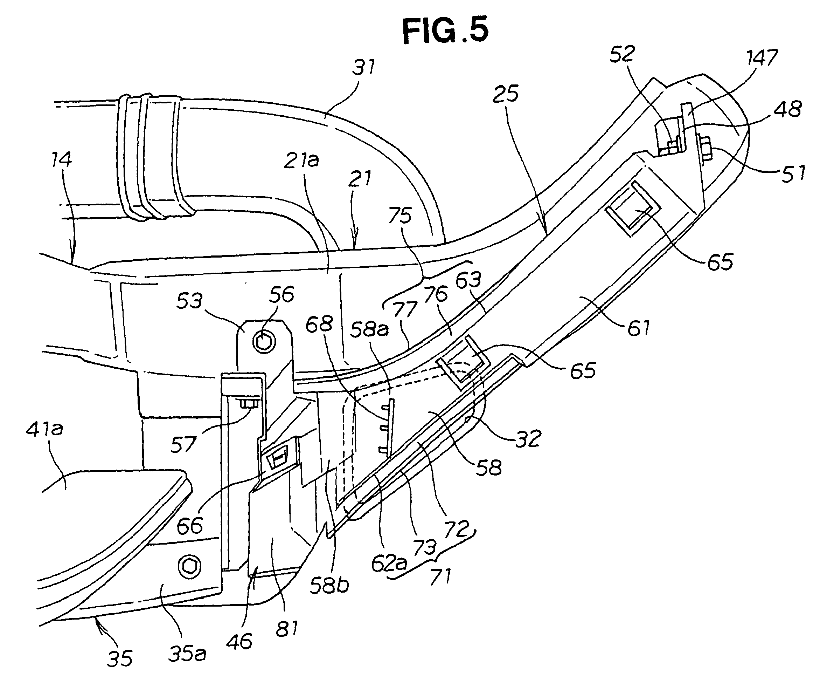

More specifically, the horizontal section 45 has a mounting piece 147 (see also Figs. 4 and 5) provided on the outer end portion 45b. The mounting piece 147 is fixed to a mounting bracket 48 of the left upper side member 21 by means of a bolt 51 and nut 52, so that the outer end portion 45b is attached to the upper surface 21a of the left upper side member 21.

Further, the horizontal section 45 has upper and front mounting pieces 53 and 54 provided on a rear region of the inner end portion 45a. The upper mounting piece 53 is fastened, by means of a bolt 56 and nut (not shown), to the upper surface 21a of the left upper side member 21. The front mounting piece 54 is fastened, by means of a bolt 57 and nut 59, to the left strut 34.

Thus, the inner end portion 45a is positioned to project forwardly of the left upper side member 21, and a substantial half portion (hereinafter referred to as "inner horizontal portion") 58 of the horizontal section 45 closer to the inner end portion 45a is positioned over the air inlet 32 of the air intake 31.

Further, the horizontal section 45 has an upper surface 61 facing a lower portion 42a of the left headlight 42, and a front wall portion 62 is formed to extend vertically downward from the front edge of the upper surface 61 while a rear wall portion 63 (Fig. 4) is formed to extend vertically downward from the rear edge of the upper surface 61.

The upper surface 61 of the horizontal section 45 is formed as a generally horizontal surface; to be more specific, the upper surface 61 has a straight slanting surface portion that slightly slants downward from the outer end portion 45b to a middle region 58a of the inner horizontal portion 58, and a curved slanting surface portion that slightly slants downward from the middle region 58a of the inner horizontal portion 58 to the inner end portion 45a.

Because the upper surface 61 of the horizontal section 45 faces the lower portion 42a of the left headlight 42 as noted above, rainwater having flown down the surface of the left headlight 42 to the lower portion 42a may drop onto the upper surface 61.

Two bumper locking claws 65 are provided on a region of the upper surface 61 near the outer end portion 45b of the horizontal section 45 and at a substantial middle region of the upper surface 61. The left end portion 38a of the bumper face 38 (Fig. 1) is locked by the bumper locking claws 65 engaging a left engaging portion (not shown) of the bumper face 38.

Further, a grille locking claw 66 is provided on the upper surface 61 near the inner end portion 45a of the horizontal section 45. The left end portion 41a of the front grille 41 is locked by the grille locking claw 66 engaging a left engaging portion (not shown) of the front grille 41 of Fig. 1.

In addition, a guide wall portion 68 is provided on the upper surface 61 at the middle region 58a of the inner horizontal portion 58 and projects upwardly to face toward the front and rear of the vehicle body. In other words, the guide wall portion 68 is provided on the upper surface 61 near the slanting section 46.

With the guide wall portion 68 provided on the upper surface 61 near the slanting section 46, water having ascended along a curved slanting surface 58b of the upper surface 61 from the middle region 58a to the inner end portion 45a can be guided toward the front and rear of the vehicle body.

For example, the guide wall portion 68 has a generally rectangular shape and is reinforced by ribs. However, the guide wall portion 68 may be of any other suitable shape than the generally rectangular shape, such as a curved shape, and the reinforcing ribs may be omitted.

The front wall portion 62 extends vertically downward the front edge of the upper surface 61. The front wall portion 62 has, in its position corresponding to the inner horizontal portion 58, a portion 62a recessed stepwise toward the rear of the vehicle body. Front drainage path 71 is formed in the recessed wall portion 62a.

The front drainage path 71 is a groove of a U sectional shape defined by the recessed wall portion 62a, curved bottom portion 72 slanting downward toward the interior of the vehicle along the lower edge of the recessed wall portion 62a and front side wall portion 73 projecting upward from the bottom portion 72. The front drainage path 71 is located over the air inlet 32. When rainwater has dropped onto the upper surface 61 via the lower portion 42a of the left headlight 42, the front drainage path 71 receives the rainwater from the upper surface 61 to direct the rainwater to a position (i.e., to the slanting section 46) relatively distant from the air inlet 32.

Fig. 4 is a rear perspective view of the left bumper-face supporting bracket 25, located over the air inlet 32 of the air intake 31, of the front vehicle body structure. The rear wall portion 63 extends substantially vertically downward from the rear edge of the upper surface 61. The rear wall portion 63 has a rear drainage path 75 formed therein to extend from near the outer end portion 45b of the horizontal section 45 to the inner end portion 45a.

The rear drainage path 75 is a groove of a U sectional shape defined by the rear wall portion 63, curved bottom portion 76 slanting downward toward the interior of the vehicle along the lower edge of the rear wall 63 and rear side wall portion 77 projecting upward from the bottom portion 76. The rear drainage path 75 is located over the air inlet 32. When rainwater has dropped onto the upper surface 61 via the lower portion 42a of the left headlight 42 (see Fig. 2), the rear drainage path 75 receives the rainwater from the upper surface 61 to direct the rainwater to the position (i.e., to the slanting section 46) distant from the air inlet 32.

Fig. 5 is a plan view of the left bumper-face supporting bracket 25, located over the air inlet 32 of the air intake 31, of the front vehicle body structure. As shown, the front drainage path 71 and rear drainage path 75 are provided adjacent to the front and rear edges, respectively, of the upper surface 61. Thus, rainwater having dropped from the upper surface 61 can be received and directed by the front and rear drainage paths 71 and 75 to the position (i.e., to the slanting section 46) distant from the air inlet 32. Thus, it is possible to reliably prevent rainwater from entering the air inlet 32.

Further, the guide wall portion 68 is provided on the upper surface 61 at the middle region 58a of the inner horizontal portion 58, which can guide water, having ascended along the slanting section 46 and curved slanting surface 58b, toward the front and rear of the vehicle body. The water, having been guided toward the front and rear of the vehicle body, can be received and directed by the front and rear drainage paths 71 and 75 to the position (i.e., to the slanting section 46) distant from the air inlet 32. Thus, it is possible to reliably prevent water, having ascended along the slanting section 46 and curved slanting surface portion 58b, from entering the air inlet 32.

Referring back to Figs. 2 and 3, the slanting section 46 extends from the inner end portion 45a of the horizontal section 45 obliquely downward toward a substantial middle of the vehicle body. The slanting section 46 has an upper surface 81 integral with the curved slanting surface 58b of the upper surface 61, and the slanting section 46 is located relatively distant from the air inlet 32 of the air intake 31 in a direction toward the middle of the vehicle body.

Vertical portion 47 extends downward from the slanting section 46 along an inner wall surface 31a of the air intake 31, and a mounting piece 83 extending toward the middle of the vehicle body is formed at the lower end of the vertical portion 47. The mounting piece 83 is fastened, by means of the bolt 36 and nut 37 (see Fig. 3), to the left mounting member 22 together with the left end portion 35a of the upper beam 35. The left mounting member 22 is bolted to the left strut 34 of the front bulkhead 14 as noted above.

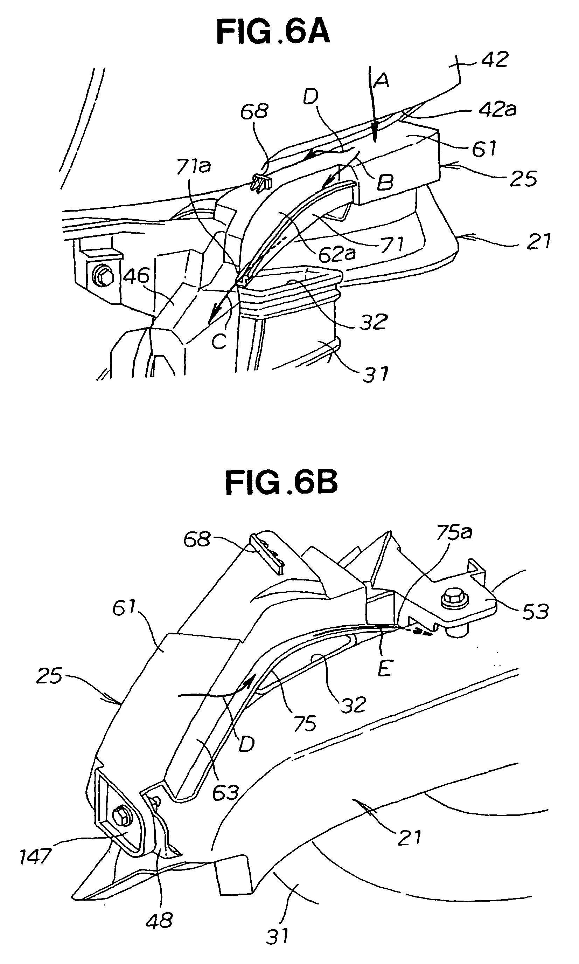

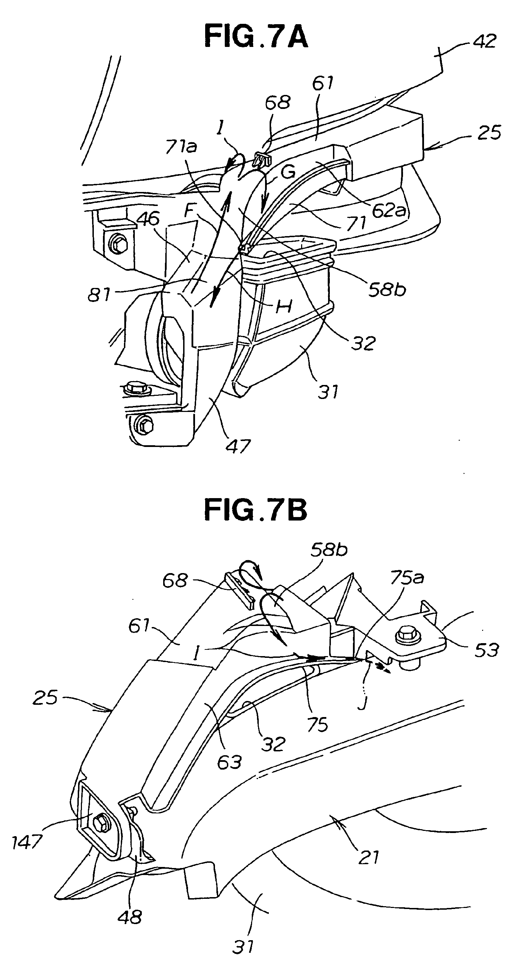

Now, with reference to Figs. 6A to 7B, a description will be given about an example mechanism which allows water to be directed by the above-mentioned front and rear drainage paths 71 and 75 formed in one of the bumper-face supporting brackets (in the illustrated example, left bumper-face supporting bracket 25).

Figs. 6A and 6B are views explanatory of how rainwater having dropped onto the left bumper-face supporting bracket 25 is guided in the instant embodiment. As illustrated in Fig. 6A, rainwater may drop onto the upper surface 61 by way of the lower portion 42a of the left headlight 42 as indicated by arrow A. A portion of the rainwater, having dropped onto the upper surface 61, flows from the upper surface 61 to the front drainage path 71 as indicated by arrow B. The rainwater is then directed by the front drainage path 71 to the position (i.e., to the slanting section 46) distant from the air inlet 32, after which it flows out through an outlet 71a of the front drainage path 71 as indicated by arrow C.

Referring to Fig. 6B, the remaining portion of the rainwater, having dropped onto the upper surface 61, flows from the upper surface 61 to the rear drainage path 75 as indicated by arrow D. The rainwater is then directed by the rear drainage path 75 to the position (i.e., to the slanting section 46) distant from the air inlet 32, after which it flows out through an outlet 75a of the rear drainage path 75 as indicated by arrow E.

Thus, the rainwater having dropped onto the upper surface 61 can be received and directed by the front and rear drainage paths 71 and 75 to the position (i.e., to the slanting section 46) distant from the air inlet 32, so that it is possible to reliably prevent the rainwater from entering the air inlet 32.

Figs. 7A and 7B are views explanatory of how water of a puddle, having ascended along the slanting section of the left bumper-face supporting bracket 25, is guided in the instant embodiment. As illustrated in Fig. 7A, water, having been splashed with the front road wheel as the vehicle travels over a puddle, may reach the slanting section 46 of the left bumper-face supporting bracket 25 by way of the front grille 41 (see Fig. 1).

The water, having reached the slanting section 46, flows from the slanting section 46 (upper surface 81) upwardly along the curved slanting surface 58b, as indicated by arrow F, to reach the guide wall portion 68. A portion of the water having reached the guide wall portion 68 is guided by the guide wall portion 68 to flow from the upper surface 61 downwardly to the front drainage path 71 as indicated by arrow G.

The water is then directed by the front drainage path 71 to the position (i.e., to the slanting section 46) distant from the air inlet 32, after which it flows out through the outlet 71a of the front drainage path 71 as indicated by arrow H.

Referring to Fig. 7B, the remaining portion of the water, having reached the guide wall portion 68, is guided by the guide wall portion 68 to flow from the upper surface 61 downwardly to the rear drainage path 75 as indicated by arrow I. The water is then directed by the rear drainage path 75 to the position (i.e., to the slanting section 46) distant from the air inlet 32, after which it flows out through the outlet 75a of the rear drainage path 75 as indicated by arrow J.

Thus, the water having ascended from the slanting section 46 (upper surface 81) along the curved slanting surface 58b can be guided by the guide wall portion 68 to the front and rear drainage paths 71 and 75, and then the water is received and directed by the front and rear drainage paths 71 and 75 to the position (i.e., to the slanting section 46) distant from the air inlet 32. Thus, it is possible to reliably prevent water of a puddle, having been splashed by the front road wheel, from entering the air inlet 32 of the air intake 31.

With the above-described arrangements, the front vehicle body structure 10 of the present invention can reliably prevent rainwater and water of a puddle from entering the air inlet 32, although the front vehicle body structure 10 is of the type in which the air intake 31 is extended forwardly to the neighborhood of the bumper face 38 by way of a region under the upper side member 21 and the air inlet 32 of the air intake 31 is oriented upwardly.

It should be appreciated that the left bumper-face supporting bracket 25, air intake 31, air inlet 32, horizontal section 45, slanting section 46, upper surface 61, front wall portion 62, rear wall portion 63, guide wall portion 68 and front and rear drainage paths 71 and 75 are not limited to the shapes illustrated in the drawings and may be formed into any other suitable shapes.

The front vehicle body structure 10 of the present invention is particularly suited for application to automotive vehicles where the air intake extends toward the front of the vehicle body by way of a region under the upper side member of the front bulkhead, the air inlet of the air intake is oriented upwardly and the bumper-face supporting bracket is provided over the air inlet.

In a front vehicle body structure 10, a bumper-face supporting bracket 25 includes: a horizontal section 45 extending in a width direction of the vehicle body along an upper side member 21; a slanting section 46 extending obliquely downward from an inner end portion 45a of the horizontal section 45 a guide wall portion 68 for guiding water, having ascended along the slanting section 46, toward the front and rear of the vehicle body; a front drainage path 71 provided in a front wall portion 62 of the horizontal section 45, and a rear drainage path 75 provided in a rear wall portion 63 of the horizontal section 45.

## Claims

1. A front vehicle body structure comprising: an air intake (31) that extends toward a front of a vehicle body by way of a region under an upper side member (21) of a front bulkhead (14) and has an air inlet (32) oriented upwardly; and a bumper-face supporting bracket (25), provided over the air inlet, for supporting a bumper face (38),
said bumper-face supporting bracket (25) comprising:
a horizontal section (45) extending in a width direction of the vehicle body along the upper side member;
a slanting section (46) extending obliquely downward from an inner end portion (45a) of said horizontal section (45);
a guide wall portion (68), provided on a region of said horizontal section (45) near said slanting section (46), for guiding water, having ascended along said slanting section (46), toward a front and rear of the vehicle body;
a front drainage path (71), provided in a front wall portion (62) of said horizontal section (45), for directing, to said slanting section (46), the water having been guided by said guide wall portion (68) toward the front of the vehicle body and water having flown from an upper surface (61) of said horizontal section (45) downward toward the front of the vehicle body; and
a rear drainage path (75), provided in a rear wall portion (63) of said horizontal section (45), for directing, to said slanting section (46), the water having been guided by said guide wall portion (68) toward the rear of the vehicle body and water having flown from the upper surface (61) of said horizontal section (45) downward toward the rear of the vehicle body.

2. A front vehicle body structure according to claim 1,
**characterized in that** said bumper-face supporting bracket (25) has a vertical portion (47) connected to an end portion (35a) of an upper beam (35), and a horizontal section (45) connected to the front bulkhead (14).

## Patentansprüche

1. Front-Fahrzeugkarosseriestruktur, umfassend:
einen Lufteinlass (31), der sich über einen Bereich unter einem oberen Seitenelement (21) einer vorderen Trennwand (14) hinweg zu einer Front einer Fahrzeugkarosserie hin erstreckt und einen Lufteinlass (32) aufweist, der nach oben orientiert ist; sowie einen Stoßfängerverkleidungsstützträger (25), der über dem Lufteinlass vorgesehen ist, um eine Stoßfängerverkleidung (38) zu tragen,
wobei der Stoßfängerverkleidungsstützträger (25) umfasst:
einen horizontalen Abschnitt (45), der sich in Breitenrichtung der Fahrzeugkarosserie entlang dem oberen Seitenelement erstreckt;
einen schrägen Abschnitt (46), der sich von einem inneren Endabschnitt (45a) des horizontalen Abschnitts (25) schräg nach unten erstreckt;
einen Führungswandabschnitt (38), der an einem Bereich des horizontalen Abschnitts (45) in der Nähe des schrägen Abschnitts (46) vorgesehen ist, um Wasser, das entlang dem schrägen Abschnitt (46) hochgestiegen ist, zur Vorder- und Rückseite der Fahrzeugkarosserie zu leiten;
einen vorderen Drainageweg (71), der in einem vorderen Wandabschnitt (62) des horizontalen Abschnitts (45) vorgesehen ist, um das Wasser, das von dem Führungswandabschnitt (68) zur Vorderseite der Fahrzeugkarosserie geleitet worden ist, und Wasser, das von einer Oberseite (61) des horizontalen Abschnitts (45) zur Vorderseite der Fahrzeugkarosserie geflossen ist, zu dem schrägen Abschnitt (46) hinab zu leiten; und
einen hinteren Drainageweg (75), der in einem hinteren Wandabschnitt (63) des horizontalen Abschnitts (45) vorgesehen ist, um das Wasser, das von dem Führungswandabschnitt (68) zur Rückseite der Fahrzeugkarosserie geleitet worden ist, und Wasser, das von der Oberseite (61) des horizontalen Abschnitts (45) zur Rückseite des Fahrzeugkörpers geflossen ist, zu dem schrägen Abschnitt (46) hinab zu leiten.

2. Front-Fahrzeugkarosseriestruktur nach Anspruch 1, **dadurch gekennzeichnet, dass** der Stoßfängerverkleidungsstützträger (25) einen vertikalen Abschnitt (47), der mit einem Endabschnitt (35a) eines oberen Trägers (35) verbunden ist, und einen horizontalen Abschnitt (45), der mit der vorderen Trennwand (14) verbunden ist, aufweist.

## Revendications

1. Structure de carrosserie frontale de véhicule comprenant : une admission d'air (31) qui s'étend vers une partie avant d'une carrosserie de véhicule par l'intermédiaire d'une région sous un élément latéral supérieur (21) d'un tablier avant (14) et possède une entrée d'air (32) orientée vers le haut ; et un support de face de pare-chocs (25), prévu sur l'entrée d'air, pour supporter une face de pare-chocs (38),
ledit support de face de pare-chocs (25) comprenant :
une section horizontale (45) s'étendant dans un sens de la largeur de la carrosserie de véhicule le long de l'élément latéral supérieur ;
une section inclinée (46) s'étendant obliquement vers le bas à partir d'une partie d'extrémité intérieure (45a) de ladite section horizontale (45) ;
une partie de paroi de guidage (68), prévue sur une région de ladite section horizontale (45) près de ladite section inclinée (46), pour guider de l'eau, étant montée le long de ladite section inclinée (46), vers une partie avant et une partie arrière de la carrosserie de véhicule ;
un passage de drainage avant (71), prévu dans une partie de paroi avant (62) de ladite section horizontale (45), pour diriger, jusqu'à ladite section inclinée (46), l'eau ayant été guidée par ladite partie de paroi de guidage (68) vers la partie avant de la carrosserie de véhicule et l'eau s'étant écoulée à partir d'une surface supérieure (61) de ladite section horizontale (45) vers le bas vers la partie avant de la carrosserie de véhicule ; et
un passage de drainage arrière (75), prévu dans une partie de paroi arrière (63) de ladite section horizontale (45), pour diriger, jusqu'à ladite section inclinée (46), l'eau ayant été guidée par ladite partie de paroi de guidage (68) vers la partie arrière de la carrosserie de véhicule et l'eau s'étant écoulée à partir de la surface supérieure (61) de ladite section horizontale (45) vers le bas vers la partie arrière de la carrosserie de véhicule.

2. Structure de carrosserie frontale de véhicule selon la revendication 1,
**caractérisée en ce que** ledit support de face de pare-chocs (25) possède une partie verticale (47) reliée à une partie d'extrémité (35a) d'une poutre supérieure (35), et une section horizontale (45) reliée au tablier avant (14).
